# EUROPEAN PATENT APPLICATION

(11) **EP 0 629 497 A2**
(43) Date of publication of application: **21.12.1994**
(21) Application number: 94303950.3
(22) Date of filing: 01.06.1994
(51) Int. Cl.: B32B 33/00, B32B 3/12, B65D 27/30, B65D 55/02

(54) **A multi-wall film**

(30) Priority: 03.06.1993 GB 9311427
(71) Applicant: TRIGON INDUSTRIES LIMITED, Mairangi Bay, Auckland (NZ)
(72) Inventor: Balderson, Simon Neville, Telford, Shropshire TF4 2LX (GB); Whitwood, Robert John, Stafford, Staffordshire SR16 1NS (GB)
(74) Representative: Gordon, Richard John Albert

(57) **Abstract**

A multi-wall film (10) comprises two layers (11,12) of barrier film material which are peripherally sealed (13) one to another to form an enclosure (14), the enclosure (14) including a material (15) which is colour sensitive to presence or absence of a gas. A flexible container formed of such a film (10) is tamper evident because, if the film (10) is severed, the gas to which the material (15) is sensitive escapes from or enters in the enclosure (14) and the material (15) thereby changes colour and the colour change is visible. The enclosure (14) may be provided with spacing means, such as a mesh (16), the presence of which increases diffusion rate of gas into and out of the enclosure (14) when the film (10) is severed.

## Description

This invention relates to a multi-wall film particularly, but not exclusively, for use in manufacture of flexible containers.

One of the major requirements for security envelopes and other packages which are formed of plastics film is for the film to change colour when it has been severed so that a flexible container formed of such a film is tamper evident.

According to the present invention, there is provided a multi-wall film comprising two layers of barrier film material characterised in that the layers are sealed one to another to form an enclosure and there is provided within the enclosure a material which is colour sensitive to presence or absence of a gas so that, when the film is severed, the gas to which the material is sensitive escapes from or enters in the enclosure and the material thereby changes colour and the colour change is visible.

Preferably, the material is sensitive to one of the gases in air, particularly oxygen or carbon dioxide. If the material is sensitive to oxygen, the multi-wall film is prepared in an atmosphere containing less oxygen than that present in air, for example pure nitrogen. If the material is sensitive to carbon dioxide, the multi-wall film is prepared in an atmosphere containing more carbon dioxide than that present in air, for example pure carbon dioxide.

When the multi-wall film is severed, the gas sensitive material will be exposed to air along the severed edges. The material will change in colour and the colour change will extend away from the edges as air diffuses in between the two outer layers and as gas contained within the enclosure diffuses outwardly therefrom; even a pinpoint puncture will be evident.

An example of a suitable gas sensitive material is the indicator material disclosed in WO 91/05252 which can be formulated to change colour when exposed to a small amount of carbon dioxide, e.g. 0.03%, in air. The multi-wall film including the material would be prepared in the absence of carbon dioxide. Alternatively, the material can be formulated to change colour at a level of carbon dioxide higher than 0.03% and the multi-wall film including the material would be prepared a carbon dioxide atmosphere. In this case, when the film is severed, carbon dioxide contained inside the film would be released and the material would change colour.

It will be appreciated that other air sensitive materials would be suitable for the gas sensitive material.

The colour change observed when the multi-wall film is severed occurs at a rate dependent upon the rate at which gas diffuses into and out of the enclosure. The gas diffusion rate, and hence the rate of colour change, can be increased by including a spacing means in the film structure so that the gas diffuses more easily.

Examples of a multi-wall film including spacing means are shown in the accompanying drawings.

In the drawings:-
Figure 1 is a diagrammatic cross section of one embodiment of a multi-wall film in accordance with the present invention in which the film includes spacing means in the form of a mesh, and
Figure 2 is a diagrammatic cross section of another ebodiment of a multi-wall film in accordance with the present invention in which the gas sensitive material is adapted to function as a spacing means.

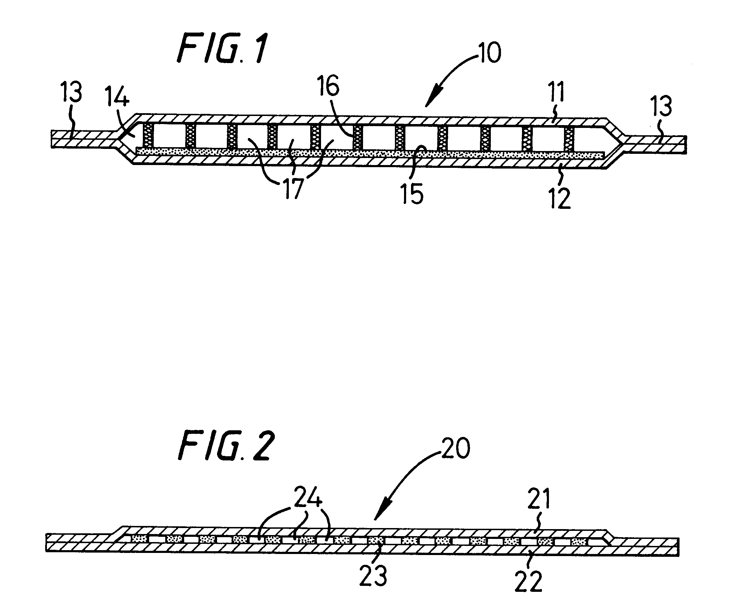

Referring now to Figure 1 of the drawings there is shown a multi-wall film 10 comprising two layers of barrier plastics film material 11, 12 which are peripherally sealed one to another, as shown at 13, to form an enclosure 14. The enclosure 14 includes a layer of a gas sensitive material 15 and a mesh 16. The mesh 16 provides spacing means which separates the two outer films 11, 12 and ensures rapid diffusion of gas into and out of the enclosure 14 through channels 17 in the mesh 16 when the film 10 is severed.

Another way to ensure rapid diffusion of the gas is to print the gas sensitive material in the form of a pattern, for example as lines or dots. The spaces between the lines or dots act as diffusion channels for the gas to enter and leave an enclosure when the multi-wall film is severed.

Referring now to Figure 2 of the drawings there is shown a multi-wall film 20 of such a configuration. Outer layers 21,22 of the multi-wall film 20 enclose a gas sensitive material 23 which is printed as dots on an inside surface of one of the outer layers 22 of the film 20, the dots providing channels 24 for gas diffusion ensuring that colour change of the material 23 is rapid once the film 20 has been severed.

It will be appreciated that it is not necessary for the gas sensitive material to cover an inside surface of the multi-wall film. A gas sensitive material of small area will change colour in the same way if applied to a larger area of multi-wall film as herein described.

It will also be appreciated that at least one of the layers forming the enclosure may be transparent or translucent.

## Claims

1. A multi-wall film (10, 20) comprising two layers (11,12; 21,22) of barrier film material characterised in that the layers (11,12; 21,22) are sealed one to another to form an enclosure (14) and there is provided within the enclosure (14) a material (15,23) which is colour sensitive to presence or absence a gas so that, when the film (1,20) is severed, the gas to which the material (15,23) is sensitive escapes from or enters in the enclosure (14) and the material (15,23) thereby changes colour and the colour change is visible.

2. A film as claimed in Claim 1 characterised in that the material (15,23) is colour sensitive to oxygen.

3. A film as claimed in Claim 1 characterised in that the material (15,23) is colour sensitive to carbon dioxide.

4. A film as claimed in Claim 2 characterised in that the material (15,23) changes colour when the proportion of carbon dioxide exceeds 0.03% of the volume of gases contained in the enclosure (14).

5. A film as claimed in any one of the preceding Claims characterised in that the enclosure (14) includes a mesh (16).

6. A film as claimed in any one of Claims 1 to 4 characterised in that the gas sensitive material (15, 23) includes gas diffusion channels (24).
